# EUROPÄISCHE PATENTSCHRIFT

(11) **EP 0 692 630 B1**
(45) Veröffentlichungstag und Bekanntmachung des Hinweises auf die Patenterteilung: **16.09.1998**
(21) Anmeldenummer: 95890124.1
(22) Anmeldetag: 30.06.1995
(51) Int. Cl.: F04B 39/10, F16K 15/08

(54) **Plattenventil**
Plate valve
Clapet à plateau

(30) Priorität: 15.07.1994 AT 1395/94
(43) Veröffentlichungstag der Anmeldung: 17.01.1996
(73) Patentinhaber: HOERBIGER VENTILWERKE GmbH, 1110 Wien (AT)
(72) Erfinder: Tschöp, Kurt, A-1110 Wien (AT)
(74) Vertreter: Pinter, Rudolf, Dipl.-Ing.

(56) Entgegenhaltungen:
- EP-A- 0 345 245
- GB-A- 669 105

## Beschreibung

Die Erfindung betrifft ein Plattenventil, insbesonders für Kolbenverdichter, mit mehreren separaten, konzentrischen Ringplatten, die gemeinsam gegenüber dem Ventilfänger über längserstreckte, radial in zumindest der maximalen Hubhöhe der Ringplatten entsprechend tiefen Ausnehmungen des Ventilfängers mit Schwenkfreiheit angeordnete Brücken zur Verteilung der auf diese einwirkenden Befederung abgestützt sind.

Ein Plattenventil mit über ähnliche Brücken gemeinsam federbelasteten Ringplatten ist beispielsweise aus der US-PS 1,890,051 bekannt, wobei dort die Brücken als Drähte mit rundem Querschnitt ausgebildet und über ihre rechtwinkelig nach oben gebogenen Enden in entsprechenden Bohrungen des Ventilfängers geführt sind. Damit ergeben sich insbesonders dann Schwierigkeiten, wenn die einzelnen Ringplatten verschieden hoch abheben, da sich dann die schräg gestellte Brücke sehr leicht im Ventilfänger festsetzt, womit das Ventil nicht mehr richtig schließt. Um diese Schwierigkeiten zu vermeiden, wurde bei einer beispielsweise aus der AT-PS 169.233 bekannten Ausführung der eingangs genannten Art für die Brücken ein einfacher Blechstreifen mit rechteckigem Querschnitt gewählt, der ein problemloses Schrägstellen der Brücken in den Ausnehmungen bei ungleich öffnenden Ringplatten ermöglicht.

Die Führung der Ringplatten in ihrer Bewegungsrichtung erfolgt bei beiden beschriebenen Ausführungen in Ausdrehungen des Ventilfängers, der damit zusätzlich für die Führung der Brücken und der Ringplatten bearbeitet werden muß. Als weiterer Nachteil ist für beide Ausführungen zu nennen, daß die Ringplatten durch ihren am Hubende erfolgenden Anschlag am Ventilfänger leicht zum Kleben neigen, was unkontrollierte Schließverzögerungen mit sich bringt.

Aufgabe der vorliegenden Erfindung ist es, ein Plattenventil der eingangs genannten Art so zu verbessern, daß die angesprochenen Nachteile der bekannten Ausführungen vermieden werden und daß insbesonders mit einfachen und zuverlässigen Mitteln eine Verbesserung der Konstruktion durch Herabsetzung von Herstellungsaufwand und Klebeneigung der Ringplatten selbst erreicht wird.

Diese Aufgabe wird gemäß der vorliegenden Erfindung bei einem Plattenventil der eingangs genannten Art dadurch gelöst, daß die den Ringplatten zugewandte Seite des Ventilfängers bis auf die Strömungskanäle und die Ausnehmungen für die Brücken eben ist, daß die Höhe der Brücken größer gleich der maximalen Hubhöhe der Ringplatten ist, und daß die Ringplatten an Zentrierelementen der Brücken anliegen und über den gesamten Hub ausschließlich mittels der Brücken gegenüber dem Ventilfänger geführt sind. Damit erfolgt die Zentrierung und Führung der Ringplatten ausschließlich über die Brücken, die wegen ihrer entsprechenden Höhe über den gesamten Hub in den zugehörigen Ausnehmungen des Ventilfängers geführt sind. Es sind damit einerseits die eingangs angesprochenen Probleme betreffend allfälliger Schrägstellung der Brücken bei ungleich öffnenden Ringplatten mit großer Sicherheit vermieden und andererseits auch zusätzliche Bearbeitungen des Ventilfängers zur Führung der Ringplatten komplett überflüssig, so daß sich eine sehr zuverlässige, einfache und kostengünstige Konstruktion ergibt.

Der Anschlag der Ringplatten zum Ende ihres Öffnungshubes kann entweder auf in weiten Grenzen beliebige Weise auf die Brücken und die dazwischen liegenden Oberflächenbereiche des Ventilfängers aufgeteilt oder aber in bevorzugter Weiterbildung der Erfindung, gemäß welcher sich die Ringplatten in geöffnetem Zustand des Plattenventils über die Brücken am Ventilfänger abstützen und zumindest zum Teil einen Spalt zum Ventilfänger aufweisen, praktisch ausschließlich den Brücken zugeordnet werden, was einem Kleben der Ventilplatten zufolge der dann nur sehr kleinen Anschlagbereiche zuverlässig entgegenwirkt.

In weiterer Ausgestaltung der Erfindung ist vorgesehen, daß die Brücken an der dem Ventilfänger zugewandten Seite topfförmige Ausnehmungen zur Abstützung einzelner Spiraldruckfedern aufweisen. Damit ist eine sichere Abstützung der Ventilfedern gewährleistet, was nicht zuletzt auch die Führung der Brücken in den Ausnehmungen des Ventilfängers verbessert.

Nach einer anderen Weiterbildung der Erfindung können die Brücken an der dem Ventilfänger zugewandten Seite auch eine sich in ihrer Längsrichtung erstreckende gemeinsame Ausnehmung zur Abstützung mehrerer beabstandeter Spiraldruckfedern aufweisen. Dies erleichtert nicht nur die Herstellung der Brücken sondern ermöglicht es auch, diese in unterschiedlichen Plattenventilen für damit unter Umständen erforderliche unterschiedliche Federabstände einzusetzen oder bei asymmetrisch angeordneten Einzelfedern durch gelegentliches Umdrehen der Brücken ein Einarbeiten der Federenden zu vermeiden oder zumindest zu begrenzen.

Die Brücken können nach einer anderen bevorzugten Ausgestaltung der Erfindung über sich in ihrer Längsrichtung erstreckende Wellfederelemente od.dgl. in den zu ihrer Führung dienenden Ausnehmungen des Ventilfängers abgestützt sein, wobei bei dieser Ausführung ebenso wie auch bei der mit den vorher angesprochenen einzelnen Spiralfedern die Befederung auch asymmetrisch bzw. über die Länge der Brücken ungleich verteilt angeordnet sein kann. Damit kann gezielt eine bestimmte Reihenfolge beim öffnen der einzelnen Ringplatten angestrebt bzw. erreicht werden, daß beispielsweise bei kleineren Fördermengen bzw. Ein- oder Ausströmgeschwindigkeiten nur einzelne der Ringplatten öffnen, während die anderen ganz oder teilweise geschlossen bleiben, was deren Verschleiß herabsetzt.

In bevorzugter weiterer Ausgestaltung der Erfindung ist vorgesehen, daß die Ausnehmungen zur Führung der Brücken im Ventilfänger bis auf einen Führungsspalt im Betrieb des Plattenventils rundum durch die Brücken geschlossen sind, was neben verbesserten Führungseigenschaften auch den Vorteil mit sich bringt, daß gebrochene Federn bzw. deren Teile nicht oder zumindest nur erschwert über das Plattenventil in einen Verdichter od.dgl. gelangen können.

Brücken und Ringplatten können aus allen in diesem Zusammenhang bekannten und gängigen Werkstoffen bzw. Werkstoffkombination hergestellt werden; besonders bevorzugt ist jedoch, daß diese gemäß einer Ausgestaltung der Erfindung aus Kunststoff, vorzugsweise faserverstärktem Kunststoff, bestehen und daß zumindest die Brücken vorzugsweise im Spritzgußverfahren hergestellt sind. Damit ergeben sich einerseits hervorragende Dichtungs- und Dämpfungseigenschaften und andererseits sehr geringe Massen, die die Funktion des Ventils weiter verbessern. Die Herstellung von Brücken und Ringplatten ist damit sehr einfach und kostengünstig, insbesonders im Hinblick darauf, daß entsprechend ausgestaltete bzw. dimensionierte Brücken und/oder Ringplatten in unterschiedlicher Anordnung für eine Reihe verschieden dimensionierter Plattenventile Verwendung finden können.

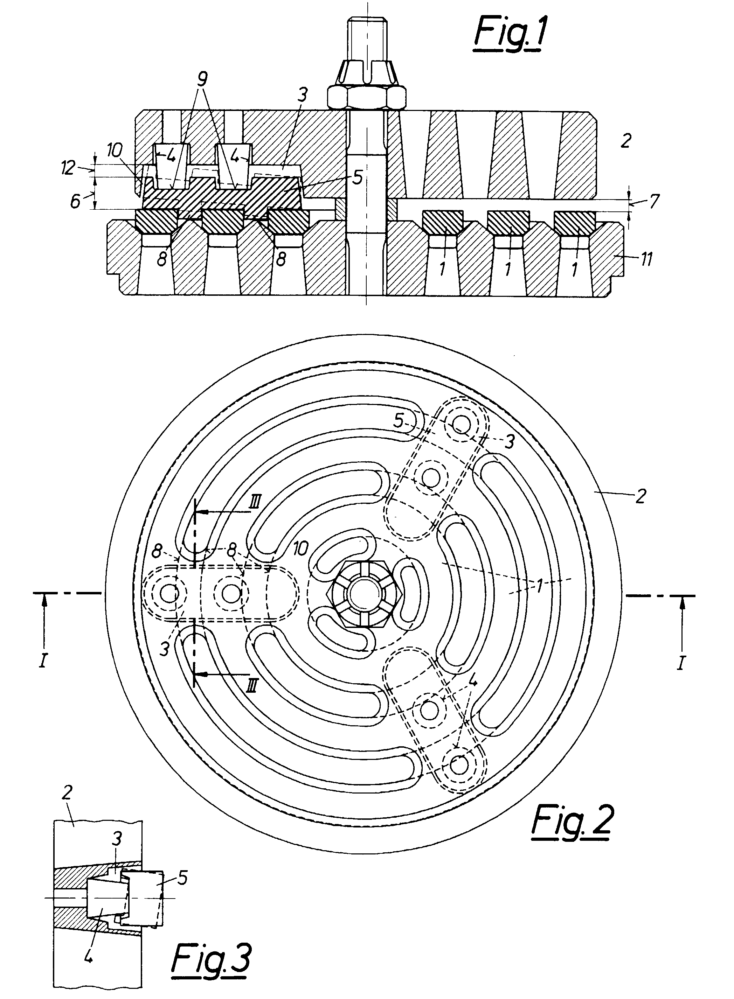

Die Erfindung wird im folgenden noch anhand eines in der Zeichnung teilweise schematisch dargestellten Plattenventils in erfindungsgemäßer Ausführung näher erläutert. Fig. 1 zeigt dabei einen Querschnitt durch das Plattenventil entlang der Linie I-I in Fig. 2, Fig. 2 zeigt eine Draufsicht auf das Ventil nach Fig. 1 und Fig. 3 zeigt einen teilweisen Schnitt entlang der Linie III-III in Fig. 2.

Das dargestellte Plattenventil dient beispielsweise als Auslaßventil eines Kolbenverdichters und weist mehrere separate, konzentrische Ringplatten 1 auf, die gegenüber dem Ventilfänger 2 über hier alle drei Ringplatten übergreifende, radial angeordnete und jeweils in Ausnehmungen 3 des Ventilfängers 2 in Hubrichtung geführte Brücken mit einzelnen Ventilfedern 4 abgestützt sind. Die geführte Höhe 6 der Brücken 5 ist größer gleich der maximalen Hubhöhe 7 der Ringplatten 1, sodaß die Führung der Ringplatten 1 während des gesamten Hubes nur über die von oben mittels der Ventilfedern 4 auf gedrückten Brücken 5 bzw. die Ausnehmungen 3 in Zusammenarbeit mit den Brücken 5 erfolgt. Die Unterseite des Ventilfängers 2 ist eben und weist keine Führungsrillen od.dgl. für die Ringplatten 1 auf. Die Ringplatten 1 ihrerseits liegen an Zentrierelementen 8 der Brücken 5, die hier durch nutartige Ausnehmungen gebildet sind, an, sodaß sie sich zumindest in radialer Richtung nicht verschieben können.

Die Brücken 5 weisen an der dem Ventilfänger 2 zugewandten Seite topfförmige Ausnehmungen 9 zur Abstützung der als einzelne Spiralfedern ausgebildeten Ventilfedern 4 auf. Im Gegensatz dazu wäre aber auch eine einzelne, sich über die Längsrichtung der Brücken 5 erstreckende, gemeinsame Ausnehmung zur Abstützung mehrerer beabstandeter Federn möglich.

Die Befederung durch die Ventilfedern 4 ist hier asymmetrisch bzw. über die Länge der Brücken 5 ungleich verteilt angeordnet, womit sich im Betrieb des Plattenventils ein früheres Abheben der schwächer befederten innersten Ringplatte 1 ergibt, welche damit bei geringeren Durchströmgeschwindigkeiten unter Umständen auch als einzige öffnet, womit die äußeren Ringplatten 1 geschont werden.

Die Ausnehmungen 3 zur Führung der Brücken 5 im Ventilfänger 2 sind bis auf einen Führungsspalt 10 im Betrieb des Plattenventils rundum durch die Brücken 5 geschlossen, womit Teile von allenfalls gebrochenen Federn 4 nicht oder nur erschwert beispielsweise in einen mit einem derartigen Plattenventil ausgerüsteten Kompressor gelangen können.

In der dargestellten Ausführung sind sowohl die Brükken 5 als auch die Ringplatten 1 aus Kunststoff, vorzugsweise faserverstärktem Kunststoff, hergestellt. Insbesonders für die Brücken empfiehlt sich eine Herstellung im Spritzgußverfahren, was eine präzise und kostengünstige Herstellung ermöglicht.

Die Ringplatten 1 stützen sich in geöffnetem Zustand hier ausschließlich über die Brücken 5 am Ventilfänger 2 ab, da der an sich die in maximale Hubhöhe 7 definierende Spalt zwischen der Oberseite der auf dem Ventilsitz 11 geschlossen aufliegenden Ringplatten 1 und der Unterseite des Fängers 2 größer ist als der Abstand 12 zwischen Oberseite der Brücken 5 und Boden der Ausnehmung 3 im Ventilfänger 2, womit dem Kleben der Ringplatten 1 am Ventilfänger 2 entgegengewirkt ist. Soferne die Dimensionen insgesamt entsprechend gewählt werden, kann bedarfsweise sichergestellt werden, daß die Ringplatten 1 auch bei ungleichem Öffnen und damit schräg gestellten Brücken 5 nicht in Kontakt mit dem Ventilfänger 2 kommen können. Andererseits kann aber auch eine Aufteilung des Anschlagens auf die Brücken 5 einerseits und die Ringplatten 1 selbst andererseits für manche Anwendungsfälle zweckmäßig sein.

Insbesonders aus Fig. 2 ist auch noch klar, daß die Brücken 5 durch gegenüber der radialen Ausdehnung des Plattenventils kleinere Ausführung auch als nur einen Teil der jeweiligen Anzahl an Ringplatten übergreifend ausgebildet sein könnten. So könnten beispielsweise bei der dargestellten Variante die Brücken 5 auch nur zwei der drei Ringplatten 1 übergreifen und dies dann eben mit einer entsprechenden Anzahl rundum abwechselnd bei den inneren und äußeren Ringplatten. Weiters könnten beispielsweise bei der dargestellten Variante auch zwischen den drei für alle Ringplatten gemeinsamen Brücken 5 noch jeweils einzelne nur die beiden äußeren Ringplatten übergreifende Brücken vorgesehen sein, was eine weitere Einflußnahme auf die individuelle Befederung der einzelnen Ringplatten 1 erlaubt.

## Patentansprüche

1. Plattenventil, insbesonders für Kolbenverdichter, mit mehreren separaten, konzentrischen Ringplatten (1), die gemeinsam gegenüber dem Ventilfänger (2) über längserstreckte, radial in zumindest der maximalen Hubhöhe (7) der Ringplatten (1) entsprechend tiefen Ausnehmungen (3) des Ventilfängers (2) mit Schwenkfreiheit angeordnete Brücken (5) zur Verteilung der auf diese einwirkenden Befederung abgestützt sind, **dadurch gekennzeichnet**, daß die den Ringplatten (1) zugewandte Seite des Ventilfängers (2) bis auf die Strömungskanäle und die Ausnehmungen (3) für die Brücken (5) eben ist, daß die Höhe (6) der Brücken (5) größer gleich der maximalen Hubhöhe (7) der Ringplatten (1) ist, und daß die Ringplatten (1) an Zentrierelementen (8) der Brücken (5) anliegen und über den gesamten Hub ausschließlich mittels der Brücken (5) gegenüber dem Ventilfänger (2) geführt sind.

2. Plattenventil nach Anspruch 1, dadurch gekennzeichnet, daß die Brücken (5) an der dem Ventilfänger (2) zugewandten Seite topfförmige Ausnehmungen (9) zur Abstützung einzelner Spiraldruckfedern (4) aufweisen.

3. Plattenventil nach Anspruch 1, dadurch gekennzeichnet, daß die Brücken (5) an der dem Ventilfänger (2) zugewandten Seite eine sich in ihrer Längsrichtung erstreckende gemeinsame Ausnehmung zur Abstützung mehrerer beabstandeter Spiraldruckfedern (4) aufweisen.

4. Plattenventil nach Anspruch 1, dadurch gekennzeichnet, daß die Brücken (5) über sich in ihrer Längsrichtung erstrekkende Wellfederelemente od. dgl. in den zu ihrer Führung dienenden Ausnehmungen (3) des Ventilfängers (2) abgestützt sind.

5. Plattenventil nach einem der Ansprüche 1 bis 4, dadurch gekennzeichnet, daß die Befederung der Brücken (5) asymetrisch bzw. über deren Länge ungleich verteilt angeordnet ist.

6. Plattenventil nach einem der Ansprüche 1 bis 5, dadurch gekennzeichnet, daß die Ausnehmungen (3) zur Führung der Brücken (5) im Ventilfänger (2) bis auf einen Führungsspalt (10) im Betrieb des Plattenventils rundum durch die Brücken (5) geschlossen sind.

7. Plattenventil nach einem der Ansprüche 1 bis 6, dadurch gekennzeichnet, daß die Brücken (5) und die Ringplatten (1) aus Kunststoff, vorzugsweise faserverstärktem Kunststoff, bestehen und daß zumindest die Brücken (5) vorzugsweise im Spritzgußverfahren hergestellt sind.

8. Plattenventil nach einem der Ansprüche 1 bis 7, dadurch gekennzeichnet, daß sich die Ringplatten (1) in geöffnetem Zustand des Plattenventils über die Brücken (5) abstützen und zumindest zum Teil einen Spalt zum Ventilfänger (2) aufweisen.

## Claims

1. A plate valve, in particular for piston compressors, with a plurality of separate concentric annular plates (1) which are jointly supported with respect to the valve guide (2) by way of longitudinally extended bridges (5) arranged radially with freedom to pivot in deep recesses (3) - corresponding at least to the maximum lifting height (7) of the annular plates (1) - of the valve guide (2) in order to distribute the springing force acting upon the said bridges (5), **characterized in that** the side of the valve guide (2) facing the annular plates (1) is flat as far as the flow ducts and the recesses (3) for the bridges (5), the height (6) of the bridges (5) is greater than or equal to the maximum lifting height (7) of the annular plates (1), and the annular plates (1) rest on centring members (8) of the bridges (5) and are guided exclusively by means of the bridges (5) with respect to the valve guide (2) over the entire stroke.

2. A plate valve according to Claim 1, **characterized in that** the bridges (5) on the side facing the valve guide (2) have cup-shaped recesses (9) for supporting individual helical compression springs (4).

3. A plate valve according to Claim 1, **characterized in that** the bridges (5) on the side facing the valve guide (2) have a common recess extending in the longitudinal direction of the said bridges (5) for supporting a plurality of spaced helical compression springs (4).

4. A plate valve according to Claim 1, **characterized in that** the bridges (5) are supported in the recesses (3) - used for guiding them - of the valve guide (2) by way of corrugated spring members or the like extending in the longitudinal direction of the said bridges (5).

5. A plate valve according to one of Claims 1 to 4, **characterized in that** the spnnging of the bridges (5) is arranged asymmetrically or irregularly distributed over their length.

6. A plate valve according to one of Claims 1 to 5, **characterized in that** the recesses (3) for guiding the bridges (5) in the valve guide (2) are closed all round by the bridges (5) as far as a guiding gap (10) during the operation of the plate valve.

7. A plate valve according to one of Claims 1 to 6, **characterized in that** the bridges (5) and the annular plates (1) consist of plastics material, preferably fibre-reinforced plastics material, and at least the bridges (5) are preferably produced in the injection-moulding process.

8. A plate valve according to one of Claims 1 to 7, **characterized in that** the annular plates (1) are supported by way of the bridges (5) in the opened state of the plate valve and have a gap with respect to the valve guide (2) at least in part.

## Revendications

1. Clapet à plateau, en particulier pour compresseur à pistons, avec plusieurs plaques annulaires (1) séparées, concentriques, qui, ensemble en face du collecteur de clapet (2), s'appuyent sur des ponts (5) s'étendant en longueur, radialement, dans des évidements (3) du collecteur de clapet (2) dont la profondeur correspond au moins à la longueur de course maximale (7) des plaques annulaires et montés avec liberté d'oscillation en vue de la répartition de la suspension élastique agissant sur eux-mêmes, caractérisé en ce que la face du collecteur de clapet (2) tournée vers les plaques annulaires (1) est plane jusqu'aux canaux d'écoulement et aux évidements (3) pour les ponts (5), en ce que la hauteur (6) des ponts (5) est supérieure ou égale à la longueur de course maximale (7) des plaques annulaires (1), et en ce que les plaques annulaires (1) s'appuyent contre des éléments de centrage (8) des ponts (5) et sont guidées par rapport au collecteur de clapet (2), sur la totalté de leur course, exclusivement au moyen des ponts (5).

2. Clapet à plateau selon la revendication 1, caractérisé en ce que les ponts (5) présentent, sur leur face tournée vers le collecteur de clapet (2), des évidements (9) en forme de pot pour l'appui de ressorts spiralés individuels (4)

3. Clapet à plateau selon la revendication 1, caractérisé en ce que les ponts (5) présentent, sur leur face tournée vers le collecteur de clapet (2), un évidement commun s'étendant dans le sens de leur longueur pour l'appui de plusieurs ressorts spiralés (4) à distance les uns des autres.

4. Clapet à plateau selon la revendication 1, caractérisé en ce que les ponts (5) s'appuyent sur des éléments à ressorts ondulés ou analogues s'étendant dans le sens de leur longueur dans les évidements (3) du collecteur de clapet (2) servant à leur guidage.

5. Clapet à plateau selon l'une des revendications 1 à 4, caractérisé en ce que la suspension des ponts (5) est disposée d'une manière asymétrique ou répartie inégalement sur leur longueur.

6. Clapet à plateau selon l'une des revendications 1 à 5, caractérisé en ce que les évidements (3) pour le guidage des ponts (5) dans le collecteur de clapet (2) sont fermés tout autour par les ponts (5) À l'exception d'un intervalle de guidage (10) pendant le fonctionnement du clapet à plateau.

7. Clapet à plateau selon l'une des revendications 1 à 6, caractérisé en ce que les ponts (5) et les plaques annulaires (1) se composent de matière plastique, de préférence de matière plastique renforcée par des fibres, et en ce que les ponts au moins (5) sont fabriqués de préférence par moulage par injection.

8. Clapet à plateau selon l'une des revendications 1 à 7, caractérisé en ce que les plaques annulaires (1), à l'état ouvert du clapet à plateau, s'appuyent sur les ponts (5) et présentent au moins partiellement un interstice par rapport au collecteur de clapet (2).
